# EUROPÄISCHE PATENTSCHRIFT

(11) **EP 2 531 814 B1**
(45) Veröffentlichungstag und Bekanntmachung des Hinweises auf die Patenterteilung: **26.02.2014**
(21) Anmeldenummer: 10800732.9
(22) Anmeldetag: 20.12.2010
(51) Int. Cl.: B60R 16/023, G08G 1/0967, B60R 25/00, G01C 21/36, G08G 1/16

(54) **FAHRERASSISTENZSYSTEM UND VERFAHREN ZUR FAHRERASSISTENZ**
DRIVER ASSISTANCE SYSTEM AND METHOD FOR DRIVER ASSISTANCE
SYSTÈME D'ASSISTANCE DE CONDUCTEUR ET PROCÉDÉ D'ASSISTANCE D'UN CONDUCTEUR

(30) Priorität: 04.02.2010 DE 102010001579
(43) Veröffentlichungstag der Anmeldung: 12.12.2012
(73) Patentinhaber: Robert Bosch GmbH, 70442 Stuttgart (DE)
(72) Erfinder: KRAUTTER, Wolfgang, 71229 Leonberg (DE); DAMBIER, Michael, 75015 Bretten (DE)
(86) Internationale Anmeldenummer: PCT/EP2010/070177
(87) Internationale Veröffentlichungsnummer: WO 2011/095254

(56) Entgegenhaltungen:
- US-A1- 2005 038 573
- US-A1- 2006 178 807

## Beschreibung

### Stand der Technik

Die Erfindung betrifft ein Fahrerassistenzsystem und einem Verfahren zur Fahrerassistenz für ein Fahrzeug, insbesondere ein Kraftfahrzeug.

Ein Fahrer eines Fahrzeugs nimmt während der Fahrt oft so genannte Tertiäraufgaben war, die nicht direkt zu seiner Fahraufgabe gehören. Beispiele für solche Tertiäraufgaben sind: z. B. das Bedienen eines Radio und Navigationssystems, Telefonieren, Essen oder Trinken. Die kognitiven Ressourcen, die ein Mensch zur gleichzeitigen Bearbeitung von Aufgaben bzw. Durchführen von Tätigkeiten besetzt, sind begrenzt. Das heißt, die Erledigung einer Tertiäraufgabe durch einen Fahren zieht mehr oder weniger Aufmerksamkeit des Fahrers von der eigentlichen Fahraufgabe ab. Unaufmerksamkeit des Fahrers ist eine bedeutende Ursache von Verkehrsunfällen. Die US 2006/0058963, die WO 2008/062403 und die US 2005/0038573 stellen Fahrerassistenzsysteme für ein Kraftfahrzeug mit einer Einrichtung zur Umgebungserfassung und einer Einrichtung zum Erfassen einer aktuellen Fahrsituation vor, die eine Verkehrssituation beurteilen und entscheiden, ob die Verkehrssituation die volle Aufmerksamkeit des Fahrers erfordert. Falls ja, so wird eine mögliche Ablenkung des Fahrers vom Verkehrsgeschehen durch Abschalten von Informations- bzw. Unterhaltungssystemen reduziert.

Die US 2006/178 807 A1 beschreibt eine Vorrichtung und ein Verfahren zum Anzeigen von Verkehrsinformationen in einem Kraftfahrzeug. Das dort beschriebene Fahrzeugnavigationssystem ist zur Auswertung von Verkehrsmeldungen ausgebildet, welche Verkehrsdaten in Bezug auf die von dem Kraftfahrzeug befahrenen Straßensegmente aufweist.

Diese bekannte Vorrichtung offenbart dadurch ein Fahrerassistenzsystem für ein Fahrzeug mit einer Einrichtung zur Umgebungserfassung und einer Einrichtung zum Erfassen einer aktuellen Fahrsituation, wobei das Fahrerassistenzsystem eine Nutzerschnittstelle, eine Einrichtung zum Erfassen einer vorausliegenden Fahrstrecke aufweist.

Ferner umfasst das dort beschriebene Fahrzeugnavigationssystem ein Kommunikationssystem und einen Empfänger, welcher die lokalen Verkehrsdaten aus dem Kommunikationssystem in Reaktion auf eine vom Kraftfahrzeug ausgesendete Datenanforderung empfängt. Die lokalen Verkehrsdaten umfassen sowohl Verkehrsinformationen in Bezug auf lokale Streckenabschnitte als auch nicht-Traffic zeitliche Ereignisse, wie Wetter, und zeit-bezogene Ereignisse, die den Verkehrsfluss beeinträchtigen.

Die US 2005/038 573 A1 beschreibt ein Kraftfahrzeuginformationssystem, welches ein Infotainment-Gerät unter bestimmten Bedingungen bezüglich der aktuellen Fahr-Umgebung des Benutzers deaktiviert. Das Kraftfahrzeuginformationssystem verwendet eine Risiko-Gewichtungs-Matrix, um bestimmte kritische Zustände der Fahr-Umgebung während der Fahrt zuordnen zu können.

### Offenbarung der Erfindung

Dagegen bieten ein Fahrerassistenzsystem und ein Verfahren zur Fahrerassistenz gemäß der vorliegenden Erfindung, wie in den Patentansprüchen 1 und 5 definiert, den Vorteil, dass das Fahrerassistenzsystem gemäß der Erfindung einen Fahrer darauf hinweist, wann ein günstiger Zeitpunkt ist, eine Tertiäraufgabe bzw. Tertiärtätigkeit auszuführen. Dies ist dann tunlich, wenn die Fahrumgebung bzw. Verkehrssituation relativ wenig Aufmerksamkeit seitens des Fahrers erfordert. Ein weiterer Vor-teil besteht darin, dass die Fahrumgebung mit bereits verfügbaren oder zumindest potenziell verfügbaren Systemen ermittelt wird, insbesondere Streckeninformationen aus einer digitalen Karte und Umgebungsinformationen mittels Videokameras oder einem Radarsensor. Der Fahrer kann dem Fahrerassistenzsystem durch einen Tastendruck mitteilen, dass er gerne eine Tertiäraufgabe durchführen möchte. Das Fahrerassistenzsystem beurteilt dann das aktuelle Verkehrsaufkommen. Die Rohinformation dafür kann von Videokameras oder einem Radarsensor geliefert werden, insbesondere die Anzahl anderer Fahrzeuge in der unmittelbaren Umgebung des Fahrzeugs und deren jeweilige Geschwindigkeit kann erfasst werden. Daraus berechnet ein Berechnungseinheit bzw. ein Mikroprozessor des Fahrerassistenzsystems mittels eines Algorithmus die Komplexität der aktuellen Fahrsituation. Das Fahrerassistenzsystem beurteilt weiterhin die bauliche Komplexität der voraus liegenden Strecke, insbesondere von Kreuzungen, Ampeln und Autobahnauffahrtenund Kurven. Diese Informationen stammen vorzugsweise aus einer gespeicherten digitalen Karte eines Navigationssystems des Fahrzeugs. Wenn der Fahrer seine Route von einem Navigationssystem des Fahrzeugs bestimmen lässt, kann das Fahrerassistenzsystem auch bald anstehende Abbiegevorgänge, Spurwechsel usw erkennen. Diese Informationen bzw. Daten werden vorteilhaft dafür genutzt, vorausschauend nach Streckenabschnitten zu suchen, deren Komplexität bezüglich der Fahraufgabe niedrig ist und somit dort die von dem Fahrer geforderte Aufmerksamkeit ebenfalls niedrig ist. Anhand dieser Daten berechnet das Fahrerassistenzsystem einen vorausliegenden Straßenabschnitt, bei dem eine Nebenaufgabe bzw. Tertiäraufgabe in günstiger Weise durchzuführen ist. Das Fahrerassistenzsystem teilt dem Fahrer mit, wie lange es voraussichtlich dauern wird, bis dieser Streckenabschnitt erreicht ist und/oder wie groß die Entfernung bis zum Beginn dieses Streckenabschnitts ist, und weist ihn optisch oder akustisch darauf hin, wann die Zeit gekommen ist, sich einer Nebenaufgabe bzw. Tertiäraufgabe zu widmen.

Ausführungsbeispiele der Erfindung werden anhand der Zeichnungen erläutert, in denen
Fig. 1 eine schematische Darstellung eines Fahrerassistenzsystems gemäß einer Ausführungsform der vorliegenden Erfindung zeigt; und
Fig. 2 ein Flussdiagramm des Verfahrens zur Fahrerassistenz gemäß einer Ausführungsform der vorliegenden Erfindung zeigt.

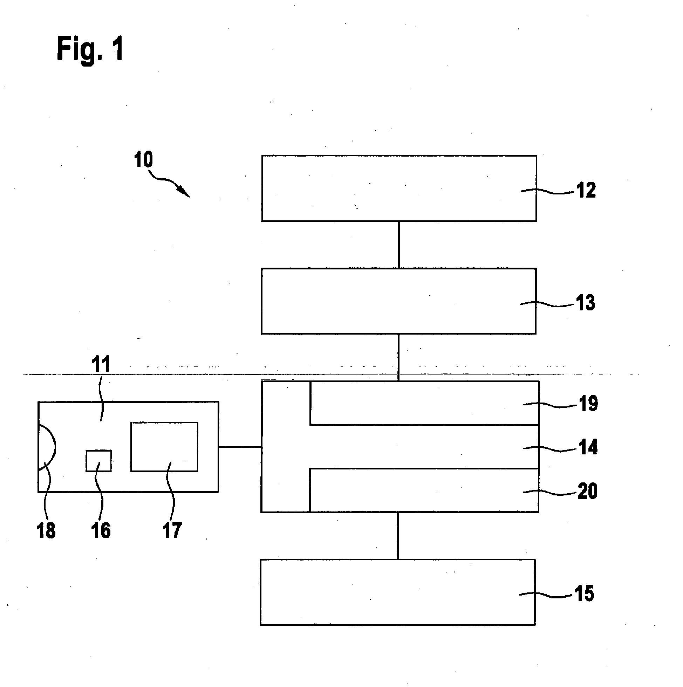

In Fig. 1 zeigt ein Fahrerassistenzsystem 10 zum automatischen Fahren gemäß einer Ausführungsform der vorliegenden Erfindung dargestellt. Das Fahrerassistenzsystem 10 kann in einen Steuergerät implementierte sein. Das Fahrerassistenzsystem 10 weist ein HMI (Human Machine Interface) bzw. Nutzerschnittstelle 11, eine Einrichtung 12 zur Umgebungserfassung, eine Einrichtung 13 zum Erfassen einer aktuellen Fahrsituation, eine Einrichtung 15 zum Erfassen einer vorausliegenden Strecke und eine Einrichtung 14 zum Abschätzen und Bewerten einer Komplexität einer Fahraufgabe auf der erfassten Strecke auf. Die Nutzerschnittstelle 11 weist ein Bedienungselement 16 zur Anforderung einer Abschätzung, wo und/oder wann ein Streckenabschnitt mit einer niedrigen Komplexität einer Fahraufgabe befahren wird sowie als Ausgabeeinrichtungen mit einem Bildschirm 17 und einem Lautsprecher 18 auf. Die Einrichtung 12 zur Umgebungserfassung benutzt zur Umgebungserfassung eine Sensorik, die die gerade befahrene Strasse und Objekte in der Umgebung des Fahrzeugs erfasst. Bewegte Objekte werden beispielsweise durch einen Radarsensor oder durch Kameras des Fahrzeugs erfasst. Aus diesen Daten und vorteilhaft erweisend aus Daten des eigenen Fahrzeugs, wie z. B. Geschwindigkeit, Beschleunigung, Lenkungseinschlag ermittelt die Einrichtung 13 zum Erfassen einer aktuellen Fahrsituation die aktuelle Fahrsituation, einschließlich der Verkehrsdichte. Die Einrichtung 14 zum Abschätzen und Bewerten einer Komplexität einer Fahraufgabe wiederum weist eine Einrichtung 19 zum Abschätzen einer zukünftigen Fahrsituation und eine Einrichtung 20 zum Ermitteln einer Komplexität der voraus liegenden Streckenumgebung auf.

Die Einrichtung 14 zum Abschätzen und Bewerten einer Komplexität einer Fahraufgabe benutzt die Einrichtung 20 zum Ermitteln einer Komplexität der voraus liegenden Streckenumgebung, um auf Basis der Kartendaten der vorausliegenden Fahr-Strecke, die von der Einrichtung 15 zum Erfassen einer vorausliegenden Fahr-Strecke übermittelt worden sind, die Komplexität der vorausliegenden Streckenumgebung abschnittsweise für Streckenabschnitte zu berechnen. Streckeninformationsdaten werden bei einer Ausführungsform durch ein Navigationssystem zur Verfügung gestellt, das über einen GPS-Empfänger verfügt. In Abhängigkeit von der aktuellen Fahrsituation, insbesondere der Verkehrsdichte, und der Komplexität der vorausliegenden Streckenumgebung schätzt die Einrichtung 14 die Komplexität der Fahraufgabe auf der erfassten Strecke ab bzw. berechnet diese. Dabei ermittelt die Einrichtung 14 zum Abschätzen und Bewerten einer Fahreraufgabe Streckenabschnitte mit niedriger baulicher Komplexität, auf denen von der Streckenumgebung her die Komplexität der Fahraufgabe voraussichtlich niedrig ist. Für diese Streckenabschnitte wird jeweils aufgrund der aktuellen Fahrsituation die zukünftige bzw. dortige Fahrsituation aufgrund der baulichen Umgebung und eventuellen aus den Navigationsdaten bekannten Verkehrsbeschränkungen abgeschätzt. Mit Hilfe der abgeschätzten Fahrsituation und der baulichen Komplexität wird für jeden Streckenabschnitt die voraussichtliche Komplexität der Fahraufgabe abgeschätzt. Dabei wird auch eine voraussichtliche Dauer einer automatischen Fahrzeugführung unter Berücksichtigung der Verkehrsdichte ermittelt. Durch Vergleich wird ein Streckenabschnitt mit einer niedrigen Komplexität der Fahraufgabe und einer vorgebbaren Mindestdauer für dessen Befahrung ermittelt. Die Einrichtung 14 zum Abschätzen und Bewerten einer Komplexität einer Fahreraufgabe gibt über die Nutzerschnittstelle 11 dem Fahrer die Information, wo bzw. an welcher Stelle und/oder wann und mit welcher voraussichtlichen Dauer ein Streckenabschnitt mit einer niedrigen Komplexität der Fahraufgabe vorliegt. Die Information an welcher Stelle ein Streckenabschnitt mit niedriger Komplexität vorliegt kann dabei die Entfernung von der aktuellen Position des Fahrzeugs bis zu dem Beginn des Streckenabschnitts niedriger Komplexität der Fahraufgabe angeben. Die Information wann ein Streckenabschnitt mit niedriger Komplexität vorliegt, kann das Zeitintervall, nach dem der Beginn dieses Streckenabschnitts durch das Fahrzeug voraussichtlich erreicht ist, angeben. Wenn der Streckenabschnitt niedriger Komplexität erreicht ist, erfolgt über die Nutzerschnittstelle 11 eine Meldung an den Fahrer, dass eine weitgehend automatische Fahrzeugführung nun möglich ist.

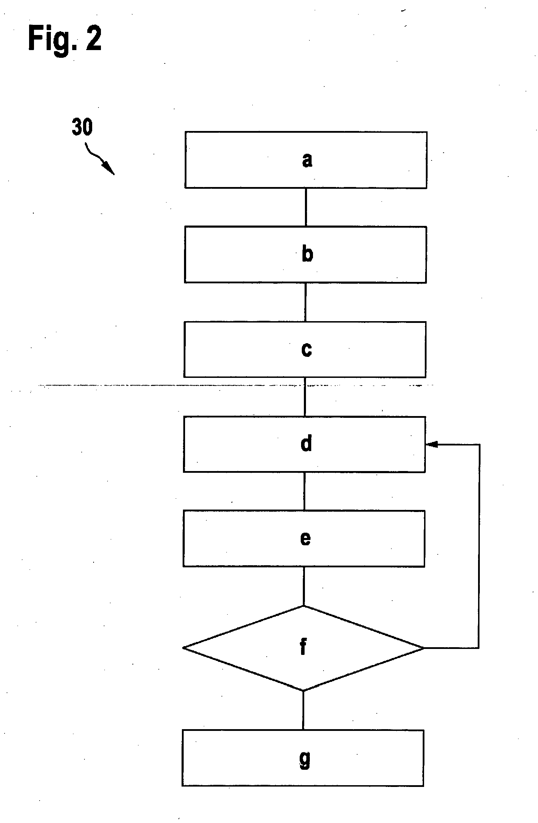

In Fig. 2 ist in einem Flussdiagramm 30 das Verfahren zur Fahrerassistenz gemäß einer Ausführungsform der vorliegenden Erfindung dargestellt. Das Verfahren wird mit Bezug auf das Fahrerassistenzsystem 10 aus Fig.1 erläutert. Das Verfahren beginnt mit Verfahrensschritt (a) nämlich dem Anfordern einer Abschätzung, wo und/oder wann ein Streckenabschnitt mit einer niedrigen Komplexität einer Fahraufgabe befahren wird durch den Fahrer mittels des Bedienungselementes 16 der Nutzerschnittstelle 11. Daraufhin führt das Fahrerassistenzsystem 10 in seiner Einrichtung 13 zum Erfassen einer aktuellen Fahrsituation den Verfahrensschritt (b) nämlich Erfassen der aktuellen Fahrsituation aus. Dies erfolgt mit Hilfe der Einrichtung 12 zur Umgebungserfassung und einer entsprechenden Sensorik, die die gerade befahrene Strasse und Objekte in der Umgebung des Fahrzeugs erfasst, sowie in diesem Beispiel unter Verwendung von Daten des eigenen Fahrzeugs, wie z. B. Geschwindigkeit, Beschleunigung oder Lenkungseinschlag. Weiterhin führt das Fahrerassistenzsystem 10 in seiner Einrichtung 15 zum Erfassen einer voraus liegenden Strecke den Verfahrensschritt (c) nämlich Erfassen einer vorausliegenden Strecke aus. Dabei werden die baulichen Daten der vorausliegenden Strecke aus Navigationsdaten zusammengestellt. Dies erfolgt entweder für eine mittels eines Navigationssystems berechnete Fahr-Route oder bei freiem Fahren aufgrund einer nach Plausibilitätskriterien ermittelten wahrscheinlichen Fahr-Route. Die Verfahrensschritte b) und c) können in beliebiger Reihenfolge oder parallel ausgeführt werden. Die Fahrsituation samt Verkehrsdichte und Daten bezüglich der voraus liegenden Strecke werden an die Einrichtung 14 zum Abschätzen und Bewerten einer Komplexität einer Fahraufgabe gegeben, in der ein Verfahrensschritt (d) nämlich das Abschätzen und Bewerten einer Fahraufgabe auf der erfassten Strecke erfolgt. Dies geschieht mittels der Einrichtung 19 zum Abschätzen einer zukünftigen Fahrsituation auf der erfassten Strecke auf Basis der aktuellen Fahrsituation, wobei die ermittelte Verkehrsdichte verwendet wird. In der Einrichtung 20 zum Ermitteln einer Komplexität der vorausliegenden Streckenumgebung wird aufgrund der Kartendaten der vorausliegenden Strecke deren Komplexität für aus den Streckendaten bestimmte Streckensegmente bestimmt. Zur Einteilung der Streckenabschnitte werden beispielsweise die Straßenklasse, Kurvenabschnitte oder gerade Streckensegmente herangezogen. Bei dem Abschätzen und Bewerten der zukünftigen Fahrsituation ermittelt die Einrichtung 14 zum Abschätzen und Bewerten eine Komplexität einer Fahraufgabe unter Berücksichtigung der Verkehrsdichte einen ein oder mehrere Streckensegmente umfassenden Streckenabschnitt mit einer niedrigen Komplexität der Fahraufgabe. Dabei wird auch eine voraussichtliche Dauer des Befahrens des Streckenabschnitts mit der niedrigen Komplexität der Fahraufgabe ermittelt. Es kann eine Mindestdauer vorgegeben bzw. eingestellt werden, so dass nach Streckenabschnitten gesucht wird, deren Dauer einer weitgehend automatischen Fahrzeugführung größer als die vorgegebene Mindestdauer ist. Die Berechnung der Dauer bzw. Fahrdauer für einen Streckenabschnitt erfolgt mit der aus den Navigationsdaten bekannten wahrscheinlichen Fahr-Geschwindigkeit des Fahrzeugs für diesen Streckenabschnitt. Die Einrichtung 14 zum Abschätzen und Bewerten einer Komplexität einer Fahraufgabe ermittelt weiterhin die Entfernung und die voraussichtliche Fahrzeit bis zu dem Beginn des Streckenabschnitts mit niedriger Komplexität der Fahraufgabe. Diese Informationen werden über die Nutzerschnittstelle 11 in einem Verfahrensschritt (e) ausgeben, wobei an den Fahrer übermittelt wird, wo und/oder wann eine Fahrsituation mit einer niedrigen Komplexität der Fahraufgabe vorliegt.

In diesem Ausführungsbeispiel ist gemäß einer möglichen Ausgestaltung des vorliegenden erfindungsgemäßen Verfahrens vorgesehen, dass das Fahrerassistenzsystem 10, welcher die Fahrt verfolgt bzw. überwacht, in einem Verfahrensschritt (f) prüft, ob ein Streckenabschnitt mit niedriger Komplexität der Fahraufgabe erreicht ist. Falls dies nicht der Fall ist wird zurück zu Verfahrensschritt (d) verzweigt und die Position des Fahrzeugs mit den Navigationsdaten abgeglichen, wobei die Entfernung und die voraussichtliche Fahrzeit bis zu dem Beginn des Streckenabschnitts laufend aktualisiert werden. Bei Erreichen des Streckenabschnitts mit niedriger Komplexität der Fahraufgabe wird in einem Verfahrensschritt (g) dem Fahrer gemeldet, dass jetzt eine Fahrsituation mit einer niedrigen Komplexität der Fahraufgabe vorliegt.

Es gibt es mehrere Möglichkeiten, den Streckenabschnitt mit einer niedrigen Komplexität der Fahraufgabe zu nutzen. Bei einer ersten Ausführungsform wird lediglich eine Information an den Fahrer übermittelt, dass der Zeitraum für eine Tertiäraufgabe günstig ist, weil von Seiten des Umgebungsverkehrs eine relativ geringe Aufmerksamkeit des Fahrers für die Fahrzeugführung notwendig ist, wobei keine weitere Unterstützung durch das

Fahrzeugassistenzsystem 10 erfolgt. Bei einer zweiten Ausführungsform kann eine teilautonome Fahrzeugführung bzw. eine Unterstützung des Fahrers durch das Fahrerassistenzsystem 10 erfolgen. Dies kann beispielsweise eine integrierte Querführung, d.h. eine Unterstützung in der Spurhaltung oder eine Adaptive Cruise Control (ACC), d.h. eine Regelung von Geschwindigkeit und Abstand, sein. Bei einer dritten Ausführungsform kann entweder automatisch oder auf Anforderung durch den Fahrer eine weitgehend automatische Fahrzeugführung aktiviert werden. Bei dem Fahrzeug kann es sich um ein beliebiges Fahrzeug handeln, insbesondere um ein Kraftfahrzeug für den Straßenverkehr. Das Kraftfahrzeug ist ein Personenkraftwagen oder ein Lastkraftwagen (LKW). Weiterhin kann es sich bei dem Fahrzeug auch z. B. um ein Wasserfahrzeug für den Schiffsverkehr handeln, insbesondere für die Binnenschifffahrt oder für Hochseetransport.

## Patentansprüche

1. Fahrerassistenzsystem (10) für ein Fahrzeug mit einer Einrichtung (12) zur Umgebungserfassung und einer Einrichtung (13) zum Erfassen einer aktuellen Fahrsituation, wobei das Fahrerassistenzsystem (10) eine Nutzerschnittstelle(11), eine Einrichtung (15) zum Erfassen einer vorausliegenden Fahr-Strecke und eine Einrichtung (14) zum Abschätzen und Bewerten einer Komplexität einer Fahraufgabe auf der erfassten vorausliegenden Fahr-Strecke aufweist, wobei die Einrichtung (14) zum Abschätzen und Bewerten der Komplexität der Fahraufgabe auf der erfassten Strecke derart ausgestaltet ist, dass eine Abschätzung, wann und wie lange ein Streckenabschnitt mit einer niedrigen Komplexität der Fahraufgabe befahren wird, erfolgt.

2. Fahrerassistenzsystem nach Anspruch 1, **dadurch gekennzeichnet, dass** die Einrichtung (13) zum Erfassen einer aktuellen Fahrsituation eine Verkehrsdichte ermittelt.

3. Fahrerassistenzsystem nach Anspruch 1 oder 2, **dadurch gekennzeichnet, dass** das Fahrerassistenzsystem (10) eine Einrichtung (20) zum Ermitteln einer Komplexität einer Streckenumgebung der vorausliegenden Fahr-Strecke aufweist.

4. Fahrerassistenzsystem nach einem der Ansprüche 1 bis 3, **dadurch gekennzeichnet, dass** die Nutzerschnittstelle (11) eine Information eine Fahr-Strecke mit einer niedrigen Komplexität der Fahraufgabe durch das Fahrzeug befahren wird, ausgibt.

5. Verfahren zur Fahrerassistenz, mit den folgenden Verfahrensschritten:
a) Anfordern einer Abschätzung, wo und/oder wann ein Streckenabschnitt mit einer niedrigen Komplexität einer Fahraufgabe befahren wird;
b) Erfassen einer aktuellen Fahrsituation;
c) Erfassen einer vorausliegenden Strecke;
d) Abschätzen und Bewerten einer Komplexität einer Fahraufgabe auf der erfassten vorausliegenden Fahr-Strecke;
e) Ermitteln und Ausgeben wo und wann ein Streckenabschnitt mit einer niedrigen Komplexität der Fahraufgabe befahren wird.

6. Verfahren nach Anspruch 5, **dadurch gekennzeichnet, dass** das Erfassen (b) der aktuellen Fahrsituation ein Ermitteln einer Verkehrsdichte umfasst.

7. Verfahren nach Anspruch 5 oder 6, **dadurch gekennzeichnet, dass** das Erfassen (c) der vorausliegenden Fahr-Strecke auf Basis von Navigationsdaten erfolgt.

8. Verfahren nach einem der Ansprüche 5 bis 7, **dadurch gekennzeichnet, dass** das Abschätzen und Bewerten (d) eine Bewertung einer Komplexität der Streckenumgebung umfasst.

9. Verfahren nach einem der Ansprüche 5 bis 8, **dadurch gekennzeichnet, dass** das Abschätzen und Bewerten (d) ein Abschätzen einer zukünftigen Fahrsituation auf Basis der Verkehrsdichte und der Streckenumgebung umfasst.

10. Verfahren nach Anspruch 8 oder 9, **dadurch gekennzeichnet, dass** das Ermitteln und Ausgeben (e) das Ermitteln eines vorausliegenden Steckenabschnitts mit einer niedrigen Komplexität der Streckenumgebung umfasst.

11. Verfahren nach einem der Ansprüche 5 bis 10, **dadurch gekennzeichnet, dass** das Ermitteln und Ausgeben (e) ein Ermitteln und Ausgeben einer Dauer des Befahrens des Streckenabschnitts mit der niedrigen Komplexität der Fahraufgabe umfasst.

12. Verfahren nach einem der Ansprüche 5 bis 11, **dadurch gekennzeichnet, dass** auf das Ermitteln und Ausgeben (e) eine Meldung (g) für den Fahrer erfolgt, dass ein Streckenabschnitt mit einer niedrigen Komplexität der Fahraufgabe vorliegt.

13. Verfahren nach einem der Ansprüche 5 bis 12, **dadurch gekennzeichnet, dass** das Fahrzeug auf dem Streckenabschnitt mit einer niedrigen Komplexität der Fahraufgabe automatisch oder teilautomatisch geführt wird.

## Claims

1. Driver assistance system (10) for a vehicle, having a device (12) for sensing surroundings and a device (13) for sensing a current driving situation, wherein the driving assistance system (10) has a user interface (11), a device (15) for sensing a section of route lying ahead and a device (14) for estimating and evaluating the complexity of a driving task on the sensed section of route lying ahead, wherein the device (14) for estimating and evaluating the complexity of the driving task on the sensed route is configured in such a way that when and how long a route section with a low complexity of the driving task is travelled along is estimated.

2. Driver assistance system according to Claim 1, **characterized in that** the device (13) determines a traffic density for sensing a current driving situation.

3. Driver assistance system according to Claim 1 or 2, **characterized in that** the driver assistance (10) has a device (20) for determining the complexity of the surroundings of the section of route lying ahead.

4. Driver assistance system according to one of Claims 1 to 3, **characterized in that** the user interface (11) outputs information about a route section with a low complexity of the driving task is travelled along by the vehicle.

5. Driver assistance method, having the following method steps:
a) requesting an estimate as to where and/or when a section of a route with a low complexity of a driving task is travelled along;
b) sensing a current driving situation;
c) sensing a route lying ahead;
d) estimating and evaluating the complexity of a driving task on the sensed route section lying ahead;
e) determining and outputting where and when a section of route with a low complexity of the driving task is travelled along.

6. Method according to Claim 5, **characterized in that** the sensing (b) of the current driving situation comprises determining a traffic density.

7. Method according to Claim 5 or 6, **characterized in that** the sensing (c) of the section of route lying ahead is carried out on the basis of navigation data.

8. Method according to one of Claims 5 to 7, **characterized in that** the estimating and evaluating (d) comprises evaluation of the complexity of the surroundings of the route.

9. Method according to one of Claims 5 to 8, **characterized in that** the estimating and evaluating (d) comprises estimating a future driving situation on the basis of the traffic density and the surroundings of the route.

10. Method according to Claim 8 or 9, **characterized in that** the determining and outputting (e) comprise determining a section of route lying ahead with a low complexity of the surroundings of the route.

11. Method according to one of Claims 5 to 10, **characterized in that** the determining and outputting (e) comprise determining and outputting a duration of the travel along the route section with a low complexity of the driving task.

12. Method according to one of Claims 5 to 11, **characterized in that** the determining and outputting (e) are followed by a message (g) for the driver to the effect that a route section with a low complexity of the driving task is present.

13. Method according to one of Claims 5 to 12, **characterized in that** the vehicle is guided automatically or partially automatically on the route section with a low complexity of the driving task.

## Revendications

1. Système d'assistance au conducteur (10) pour un véhicule comprenant un dispositif (12) de détection d'environnement et un dispositif (13) pour détecter une situation de conduite actuelle, le système d'assistance au conducteur (10) présentant une interface d'utilisateur (11), un dispositif (15) pour détecter un trajet à parcourir et un dispositif (14) pour estimer et évaluer une complexité d'une tâche de conduite sur le trajet à parcourir détecté, le dispositif (14) pour estimer et évaluer la complexité de la tâche de conduite sur le trajet détecté étant configuré de telle sorte qu'une estimation est effectuée du moment et de la durée du déplacement sur une portion du trajet qui présente une faible complexité de la tâche de conduite.

2. Système d'assistance au conducteur selon la revendication 1, **caractérisé en ce que** le dispositif (13) pour détecter une situation de conduite actuelle détermine une densité de trafic.

3. Système d'assistance au conducteur selon la revendication 1 ou 2, **caractérisé en ce que** le système d'assistance au conducteur (10) présente un dispositif (20) pour déterminer une complexité d'un environnement de trajet du trajet à parcourir.

4. Système d'assistance au conducteur selon l'une des revendications 1 à 3, **caractérisé en ce que** l'interface d'utilisateur (11) délivre une information d'un trajet parcouru par le véhicule qui présente une faible complexité de la tâche de conduite.

5. Procédé d'assistance au conducteur comprenant les étapes de procédé suivantes :
a) sollicitation d'une estimation du lieu et/ou du moment du déplacement sur une portion de trajet qui présente une faible complexité d'une tâche de conduite ;
b) détection d'une situation de conduite actuelle ;
c) détection d'un trajet à parcourir ;
d) estimation et évaluation d'une complexité d'une tâche de conduite sur le trajet à parcourir détecté ;
e) détermination et délivrance du lieu et du moment du déplacement sur une portion de trajet qui présente une faible complexité de la tâche de conduite.

6. Procédé selon la revendication 5, **caractérisé en ce que** la détection (b) de la situation de conduite actuelle comprend une détermination d'une densité de trafic.

7. Procédé selon la revendication 5 ou 6, **caractérisé en ce que** la détection (c) du trajet à parcourir s'effectue en se basant sur des données de navigation.

8. Procédé selon l'une des revendications 5 à 7, **caractérisé en ce que** l'estimation et l'évaluation (d) comprend une évaluation d'une complexité de l'environnement de trajet.

9. Procédé selon l'une des revendications 5 à 8, **caractérisé en ce que** l'estimation et l'évaluation (d) comprend une estimation d'une future situation de conduite en se basant sur la densité de trafic et l'environnement de trajet.

10. Procédé selon la revendication 8 ou 9, **caractérisé en ce que** la détermination et la délivrance (e) comprend la détermination d'une portion de trajet à parcourir qui présente une faible complexité de l'environnement de trajet.

11. Procédé selon l'une des revendications 5 à 10, **caractérisé en ce que** la détermination et la délivrance (e) comprend une détermination et une délivrance d'une durée du déplacement sur la portion de trajet qui présente la faible complexité de la tâche de conduite.

12. Procédé selon l'une des revendications 5 à 11, **caractérisé en ce que** suite à la détermination et à la délivrance (e), un message (g) a lieu à destination du conducteur indiquant qu'il existe une portion de trajet qui présente une faible complexité de la tâche de conduite.

13. Procédé selon l'une des revendications 5 à 12, **caractérisé en ce que** le véhicule est guidé automatiquement ou semi-automatiquement sur la portion de trajet qui présente une faible complexité de la tâche de conduite.
